# EUROPEAN PATENT SPECIFICATION

(11) **EP 0 385 814 B1**
(45) Date of publication and mention of the grant of the patent: **29.11.1995**
(21) Application number: 90302315.8
(22) Date of filing: 05.03.1990
(51) Int. Cl.: B60R 1/06

(54) **Mirror Assembly**
Rückspiegelzusammenbau
Construction de rétroviseur

(30) Priority: 03.03.1989 GB 8904877
(43) Date of publication of application: 05.09.1990
(73) Proprietor: THOMPSON DEVELOPMENT ENGINEERING LIMITED, Telford Shropshire TF3 3BA (GB)
(72) Inventor: Thompson, Geoffrey Raynor, Tettenhall, Wolverhampton, WV6 8LQ (GB); Steinert, Peter Anthony, Muxton, Telford, Shropshire, TF2 8GS (GB)
(74) Representative: Lally, William

(56) References cited:
- DD-A- 70 797
- DE-C- 3 411 631
- DE-U- 1 883 309
- DE-U- 8 531 937
- DE-U- 8 710 366
- DE-U- 8 900 442
- FR-A- 2 362 025
- FR-A- 2 472 493
- FR-A- 2 574 726
- GB-A- 708 349
- GB-A- 2 177 985

## Description

The present invention relates to a mirror assembly for a motor vehicle, particularly a side mirror commonly mounted on the wing or door frame of the vehicle.

In document FR-A-2362025 there is disclosed a mirror assembly for a motor vehicle comprising a support adapted to be secured to the vehicle, a mounting assembly secured to the support for limited pivotal movement relative to the support, and a mirror mounted on the mounting assembly by a carrier assembly providing for pivotal movement of the mirror, in the plane of the mirror, relative to the mounting assembly between a first position and a second position in which second position the mirror is displaced from its first position and extends at least in part to one side of the mounting assembly.

In accordance with one aspect of the present invention there is provided such a mirror assembly characterised in that the carrier assembly comprises at least one lever the or each of which is pivotally connected at its one end to the mirror and at its other end to the mounting assembly whereby the mirror is translationally displaceable relative to the mounting assembly between said first and second positions of the mirror upon pivotal movement of the or each said lever relative to the mounting assembly.

The or each said lever may be cranked to permit the pivoting thereof in a manner wherein pivotal movement to said second position is not obstructed by the support, the mounting assembly having at least one aperture therein to permit reception of the cranked part of the or each lever when the mirror is moved towards its said first position.

Preferably securing means are provided to restrain movement of the mirror when the mirror is in either its said first or second position.

In accordance with another aspect of the invention the mirror assembly is characterised in that the carrier assembly comprises a plurality of support members mounted for sliding movement relative to one another and relative to the mounting assembly on which the support members are carried whereby the mirror is linearly translationally displaceable relative to the mounting assembly between said first and second positions of the mirror upon sliding movement of said support members relative to the mounting assembly.

The first position may, in conventional manner, involve the mirror being substantially within the peripheral boundary of a housing for a mirror in which position, ordinarily, a mirror is received, and will be used for driving under normal conditions. The second position will be used to give laterally extended rear visibility such as, for example, when the vehicle is being used to tow a caravan, the presence of which will often partially or totally obscure visibility in a conventionally positioned mirror.

If desired drive means may be provided to move the mirror between its first and second positions.

There will now be given detailed descriptions to be read with reference to the accompanying drawings of embodiments which have been selected for the purposes of illustrating the invention by way of example.

In the accompanying drawings:
FIGURE 1 is a perspective view of a mirror assembly which is a first embodiment of the invention in an extended condition;
FIGURE 2 is a plan view of the mirror assembly depicted in Figure 1 with a part broken away, the broken lines in this Figure indicating the positions of various parts of the assembly when the mirror is in the first, normal position; and
FIGURES 3, 4 and 5 are schematic views illustrating a second embodiment, similar to the first embodiment, but in which linear movement is utilised as distinct from pivoting movement.

Referring to the drawings a mirror assembly 1 comprises a housing 2 which is adapted for attachment to a panel of a motor vehicle 3 and which housing 2 provides a cavity 4 in which is movably retained a mounting assembly 5 for a mirror 18.

The mounting assembly 5 comprises a mounting plate 6 which is attached to the housing within the cavity 4 by a ball and socket joint 8 such that the mounting plate 6 may be tilted within the cavity 4 by pivoting of the mounting plate 6 about the ball and socket joint 8.

The mounting plate 6 may be tilted within the cavity 4 of the housing 2 in a conventional manner by mechanically and/or electrically operable means which may be actuated by a person sitting within the vehicle. For example the mounting plate 6 may have rigidly attached thereto a lever which extends to a side of the mounting and which extends through a panel 3 of the vehicle and at an end of which is provided a handle which may be manually actuated by a driver of the vehicle to tilt the mounting plate 6.

Supported by the mounting plate 6 is a carrier assembly 21, comprising in the first embodiment a plurality of cranked levers 9, 19 and 11. Inner end portions of the levers are secured to the mounting plate, on a surface 20 there of which is presented away from the cavity 4, by pivots 12, 13 and 14 whereby the levers may be pivotally moved relative to the mounting plate 6.

The levers 9, 10, 11 are each pivotally connected at their other ends to pivots 15, 16, 17 on a support plate 21 carrying the mirror 18.

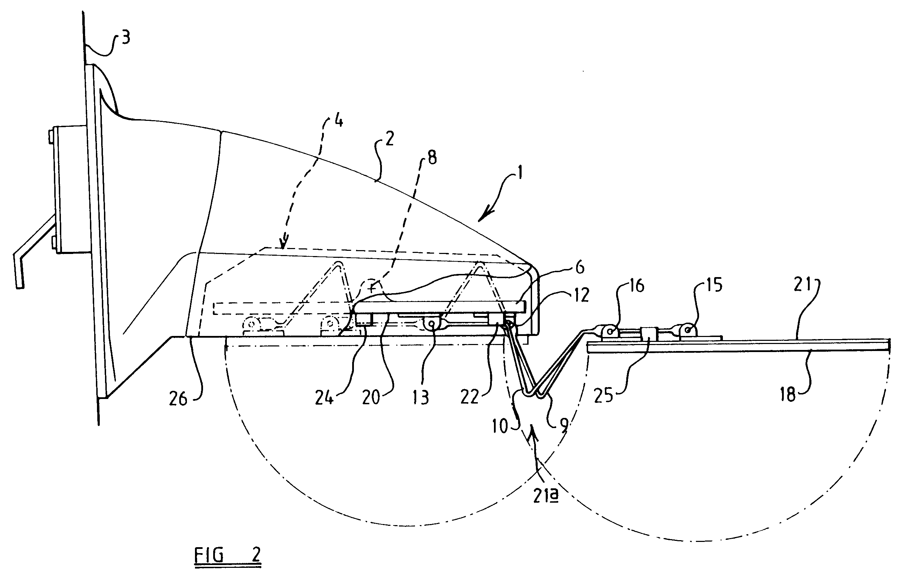

Pivotal movement of the levers 9, 10, 11 relative to the mounting plate 6 and support plate 21 causes translatory movement of the mirror 18, as indicated by the chain-dot-lines in Figure 2, between a first position in which the mirror 18 overlies the mounting plate 6 and lies within the peripheral boundary 26 of the housing 2, i.e. the position of the mirror during normal driving conditions, and a second position in which the mirror extends to one side of the mounting, seen in Fogure 1, the levers operating in the manner of a parallel linkage.

The mounting plate 6 is provided with a plurality of securing means 22, 23, 24 which comprise receiving means into which appropriate portions of respective ones of the levers 9, 10, 11 may be releasably snap-engaged in order to restrain pivotal movement of the levers 9, 10, 11 relative to the mounting plate 6, the means 24 securing the lever 9 when the mirror is in its first position and the means 22 and 23 securing the levers 10 and 11 when the mirror is in its second position.

The plate 21 also provides a securing means 25 of the same kind as the securing means 22, 23, 24, into which a portion of the central cranked lever 9 may be releasably snap-engaged to prevent relative movement between the lever 9, and the mirror 18 when the mirror is in its second position.

When the mirror 18 is moved to the second position relative to the mounting plate 6 the levers 10, 11 are snap-engaged into the securing means 22, 23 respectively and the lever 9 is snap-engaged into the securing means 25 in order to secure the mirror 18 substantially parallel relative to the mounting plate 6 and in an extended condition relative to the said mounting plate 6.

In order to move the mirror 18 from the second position to the first position the levers 10, 11 are disengaged from the securing means 22, 23 and the lever 9 is disengaged from the securing means 25 and the levers are pivoted relative to the mounting plate 6 and the mirror 18 until the mirror 18 overlies the mounting plate 6 and lies within the peripheral boundary 26 of the housing 2. The mirror 18 is secured in this position relative to the mounting plate 6 by snap-engagement of the lever 9 in the securing means 24.

The mirror may be moved from the first position to the second position again by disengaging the lever 9 from the securing means 24 and pivoting the levers 9, 10, 11 to move the mirror 18 to one side of the mounting 5 and securing it in the second position as described above. Thus the driver of a vehicle towing (e.g.) a caravan may, by simple movement of the mirror assembly to its second position, be provided with an appropriate rear view of the vehicle, which rear view may be adjusted from within the vehicle in conventional manner.

In the first embodiment if desired movement of the mirror 18 from its first to it second position may be afforded by electrically-operative drive means, conveniently provided by electric motors operative to rotate the levers about their pivotal mountings 12, 13 and 14. In such circumstances, securing means other than the securing means 22, 23, 24 and 25 described above may be utilised to restrain movement of the cranked levers 9, 10 and 11, other than when being driven by the drive means between their first and second positions, such securing means in such circumstances being afforded by (for example) solenoid locks. The drive means may operate for a timed period, or until a specific overload current is reached, indicating the extreme position of movement of the mirror, or if desired sensing means may he utilised to indicate the arrival od the mirror at one of its terminal positions.

The mounting plate 6 provides a plurality of apertures 19 through which may be inserted the cranked portions of the levers 9, 10, 11 when the mirror 18 approaches and is in the first position relative to the mounting plate 6. In this way, the cranked portions of the levers 9, 10, 11 may be accommodated within the cavity 4 of the housing 2 behind the surface 20 of the mounting plate 6 so that the mirror, when in the first position, will be adjacent to and substantially parallel with the mounting plate 6.

The dashed lines in Figure 2 indicate the positions of various parts of the assembly when the mirror is in the first position.

As the mirror is moved from the first position to the second position the cranked portions of the levers 9, 10, 11 are withdrawn from the cavity 4 through the apertures 19.

The levers 9, 10, 11 are cranked so as to permit pivoting of the mirror 18 relative to the mounting plate 6 in a a manner so as not to be obstructed by the protruding peripheral boundary 26 of the housing 2.

An assembly of the kind described may be adapted for insertion into a specific design of conventional mirror housing suitable for a specific model of motor vehicle and it may be used to replace conventional "permanent" mirror assemblies.

Alternatively the whole mirror assembly including the housing may be substituted for a conventional assembly.

The assembly according to the invention is easily replaced in the event of any damage thereto and such an assembly is less likely to sustain serious damage in collisions than certain conventional systems, provided that the housing 2 itself is not struck during the collision.

A mirror assembly according to the invention permits of rapid and easy adjustment of the mirror for driving under different conditions.

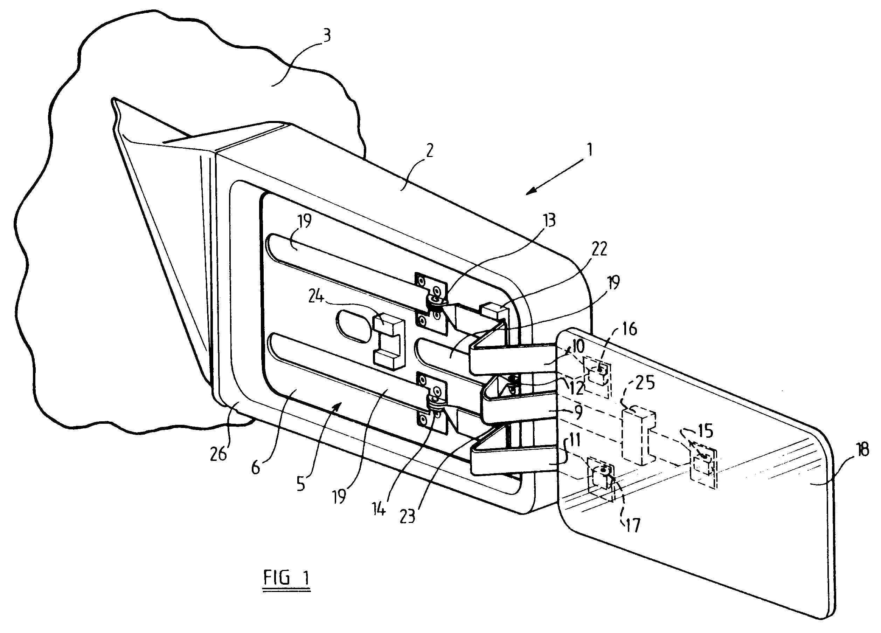

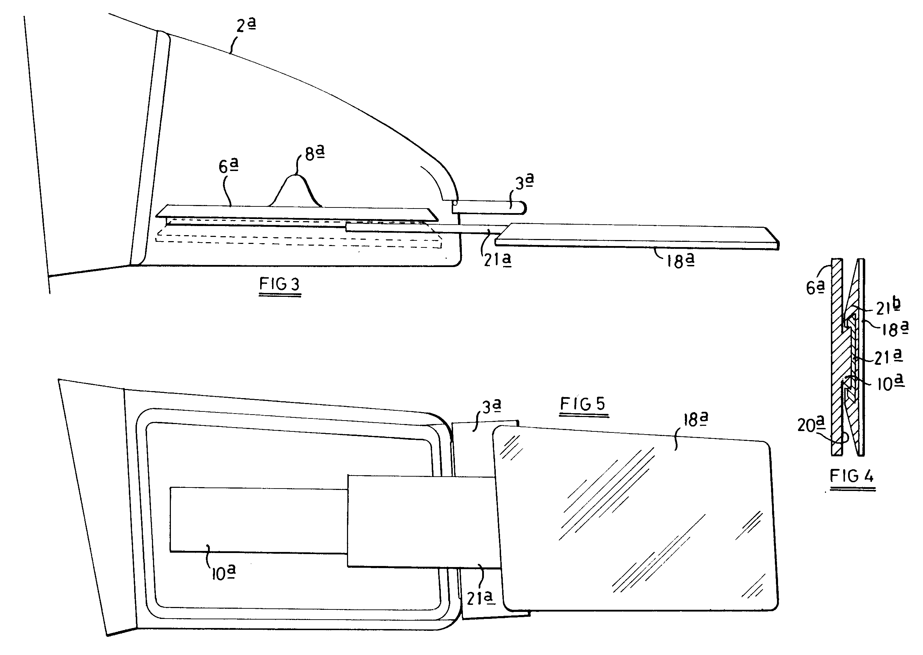

The mirror assembly which is the second embodiment of this invention (see Figures 3, 4 and 5), in relation to which similar numerals to those used in Figures 1 and 2, with the suffix a, have been utilised, is similar to the first embodiment, but utilises linear sliding movement of the mirror 18a relative to the housing 2a to transfer the mirror from its first position to its second position.

Thus the mounting comprises a mounting plate 6a which is attached to the housing 2a by a ball and socket joint 8a in a manner such that the mounting plate 6a may be tilted within the cavity 4a by pivoting of the mounting plate 6a about the ball and socket joint 8a. The mounting plate 6a may be tilted within the cavity 4a in a conventional manner by mechanical and/or electrically operable means which may be acutated by a person sitting within the vehicle.

The mounting plate 6a is provided, on a surface 20a thereof, with a dovetail formation 10a, on which a carrier assembly comprising a carrier plate 21a is slidably mounted in a width-wise direction (see Figure 4). The mirror 18a is secured to a support plate 21b, said support plate similarly being provided with a dovetail formation, and being slidably mounted on the carrier plate 21a.

In this manner the mirror may be slid in a direction width-wise of the housing 2a from a normal driving position, shown in dotted lines in Figure 3, to a position for towing, shown in full lines in Figures 3 and 5, such movement involving outwardly sliding movement of the carrier plate 21a relative to the housing 6a, and outward sliding movement of the support plate relative to the carrier plate.

Snap-lock means are provided (not shown) for releasably securing the mirror in an extended position relative to the carrier plate 21a, and for securing the carrier plate 21a in its extended position relative to the mounting plate 6a.

Conveniently a part 3a of the casing, adjacent to an outer edge thereof, is hinged to provide an opening in the side wall of the housing 2a to permit movement of the mirror into its towing position, said hinged part being capable of being snap-fitted back into a closed position when the mirror has been returned to its normal position.

As with the first embodiment, movement of the mirror 18a between its first and second position may be effected by electrical or electronic drive means.

In both the first and second embodiments, a security locking system may be provided to prevent undesired movement of the mirror between its first and second positions, such a locking system conveniently being released from the interior of the vehicle to which the assembly is to be attached.

## Claims

1. A mirror assembly for a motor vehicle comprising a support (2, 2a) adapted to be secured to the vehicle, a mounting assembly (6, 6a) secured to the support for limited pivotal movement relative to the support, and a mirror (18, 18a) mounted on the mounting assembly by a carrier assembly (21, 21a) providing for movement of the mirror relative to the mounting assembly between a first position and a second position in which second position the mirror is displaced from its first position and extends at least in part to one side of the mounting assembly
characterised in that
the carrier assembly (21) comprises at least one lever (9, 10, 11) the or each of which is pivotally connected at its one end to the mirror (18) and at its other end to the mounting assembly (6) whereby the mirror is translationally displaceable relative to the mounting assembly between said first and second positions of the mirror upon pivotal movement of the or each said lever relative to the mounting assembly.

2. A mirror assembly as claimed in claim 1 further characterised in that securing means (22, 23, 24, 25) are provided to restrain movement of the mirror when the mirror is in either its said first or second position.

3. A mirror assembly as claimed in either one of claims 1 or 2 further characterised in that the or each said lever (9, 10, 11) is cranked to permit the pivoting thereof in a manner wherein pivotal movement to said second position is not obstructed by the support (2), the mounting assembly having at least one aperture (19) therein to permit reception of the cranked part of the or each lever when the mirror is moved towards its said first position.

4. A mirror assembly for a motor vehicle comprising a support (2, 2a) adapted to be secured to the vehicle, a mounting assembly (6, 6a) secured to the support for limited pivotal movement relative to the support, and a mirror (18, 18a) mounted on the mounting assembly by a carrier assembly (21, 21a) providing for movement of the mirror relative to the mounting assembly between a first position and a second position in which second position the mirror is displaced from its first position and extends at least in part to one side of the mounting assembly
further characterised in that
the carrier assembly (21a) comprises a plurality of support members (21a, 21b) mounted for sliding movement relative to one another and relative to the mounting assembly (6a) on which the support members are carried whereby the mirror (18a) is linearly translationally displaceable relative to the mounting assembly between said first and second positions of the mirror upon sliding movement of said support members relative to the mounting assembly.

5. A mirror assembly as claimed in any one of the preceding claims further characterised in that drive means are provided to move the mirror (18, 18a) between its said first and second positions.

## Patentansprüche

1. Spiegel-Baugruppe für ein Kraftfahrzeug, bestehend aus einem am Fahrzeug zu montierenden Träger (2, 2a), einer am Träger befestigten und diesem gegenüber begrenzt verschwenkbaren Halterungs-Baugruppe (6, 6a) und einem an der Halterungs-Baugruppe über eine Knaggen-Baugruppe (21, 21a) montierten Spiegel (18, 18a), wobei besagte Knaggen-Baugruppe die Bewegung des Spiegels im Verhältnis zur Halterungs-Baugruppe zwischen einer ersten Stellung und einer zweiten Stellung ermöglicht, in welcher der Spiegel aus der ersten Stellung verschoben wird und zumindestens teilweise auf einer Seite der Halterungs-Baugruppe hervorsteht,
dadurch gekennzeichnet, daß
die Knaggen-Baugruppe (21) aus mindestens einem Hebel (9, 10, 11) besteht, der an einem Ende am Spiegel (18) und am anderen Ende an der Halterungs-Baugruppe (6) angelenkt ist, wodurch der Spiegel parallel und im Verhältnis zur Halterungs-Baugruppe nach Schwenkbewegung des mindestens einen Hebels im Verhältnis zur Halterungs-Baugruppe zwischen besagten ersten und zweiten Stellungen hin- und hergeschoben werden kann.

2. Spiegel-Baugruppe nach Anspruch 1, dadurch gekennzeichnet, daß Befestigungsmittel (22, 23, 24, 25) vorgesehen sind, die die Bewegung des Spiegels in seiner ersten oder zweiten Stellung hindern.

3. Spiegel-Baugruppe nach Anspruch 1 oder 2, dadurch gekennzeichnet, daß der mindestens eine besagte Hebel (9, 10, 11) so gekröpft ist, daß er auf eine Weise geschwenkt werden kann, auf welche die Schwenkbewegung in besagte zweite Stellung nicht vom Träger (2) behindert wird, wobei die Halterungs-Baugruppe mindestens eine Öffnung (19) aufweist, in welche der gekröpfte Teil des mindestens einen Hebels eingreifen kann, wenn der Spiegel in besagte erste Stellung geschoben wird.

4. Spiegel-Baugruppe für eine Kraftfahrzeug, bestehend aus einem am Fahrzeug zu montierenden Träger (2, 2a), einer am Träger befestigten und diesem gegenüber begrenzt verschwenkbaren Halterungs-Baugruppe (6, 6a) und einem an der Halterungs-Baugruppe über eine Knaggen-Baugruppe (21, 21a) montierten Spiegel (18, 18a), wobei besagte Knaggen-Baugruppe die Bewegung des Spiegels im Verhältnis zur Halterungs-Baugruppe zwischen einer ersten Stellung und einer zweiten Stellung ermöglicht, in welcher der Spiegel aus der ersten Stellung verschoben wird und zumindestens teilweise auf einer Seite der Halterungs-Baugruppe hervorsteht,
dadurch gekennzeichnet, daß
die Knaggen-Baugruppe (21a) aus einer Vielzahl von im Verhältnis zueinander und im Verhältnis zu der sie tragenden Halterungs-Baugruppe (6a) verschiebbar gelagerten Stützgliedern (21a, 21b) besteht, wodurch der Spiegel linear parallel und im Verhältnis zur Halterungs-Baugruppe nach Verschiebung besagter Stützglieder im Verhältnis zur Halterungs-Baugruppe zwischen besagten ersten und zweiten Stellungen hin- und hergeschoben werden kann.

5. Spiegel-Baugruppe nach einem der vorhergehenden Ansprüche, dadurch gekennzeichnet, daß zur Verschiebung des Spiegels (18, 18a) zwischen besagten ersten und zweiten Stellungen Antriebsmittel vorgesehen sind.

## Revendications

1. Un ensemble rétroviseur pour un véhicule motorisé comprenant un support (2, 2a) adapté de façon à être fixé sur le véhicule, un ensemble de montage (6, 6a) fixé sur le support pour donner un mouvement de pivotement limité par rapport au support, et un miroir (18, 18a) monté sur l'ensemble de montage par un ensemble porteur (21, 21a) permettant au miroir de se déplacer par rapport à l'ensemble de montage entre une première position et une seconde position, seconde position dans laquelle le miroir est déplacé de sa première position et se déploie partiellement du moins sur l'un des côtés de l'ensemble de montage
caractérisé en ce que
l'ensemble porteur (21) comprend au moins un levier (9, 10, 11), ce levier ou chacun de ces leviers est relié par pivotement à l'une de ses extrémités au miroir (18) et à l'autre extrémité à l'ensemble de montage (6), situation dans laquelle le miroir peut être déplacé par translation par rapport à l'ensemble de montage entre lesdites première et seconde positions du miroir, lors du mouvement de pivotement du levier ou de chacun desdits leviers par rapport à l'ensemble de montage.

2. Un ensemble rétroviseur, selon les stipulations de la revendication 1, caractérisé en outre en ce que des dispositifs de fixation (22, 23, 24, 25) sont prévus pour (imiter le mouvement du miroir lorsque le miroir se trouve dans lesdites première et seconde positions.

3. Un ensemble rétroviseur, selon les stipulations de l'une quelconque des revendications 1 ou 2, caractérisé en outre en ce que le levier ou chacun desdits leviers (9, 10, 11) est coudé pour permettre le pivotement de celui-ci, d'une manière dans laquelle le mouvement de pivotement par rapport à ladite seconde position n'est pas entravé par le support (2), l'ensemble de montage ayant une ouverture au moins (19) pour lui permettre de recevoir la partie coudée du levier ou de chaque levier quand le miroir est déplacé vers ladite première position.

4. Un ensemble rétroviseur pour un véhicule motorisé comprenant un support (2, 2a) adapté de façon à être fixé sur le véhicule, un ensemble de montage (6, 6a) fixé sur le support pour donner un mouvement de pivotement limité par rapport au support, et un miroir (18, 18a) monté sur l'ensemble de montage par un ensemble porteur (21, 21a) permettant au miroir de se déplacer par rapport à l'ensemble de montage entre une première position et une seconde position, seconde position dans laquelle le miroir est déplacé de sa première position et se déploie partiellement du moins sur l'un des côtés de l'ensemble de montage
caractérisé en outre en ce que
l'ensemble porteur (21a) comprend plusieurs membres de support (21a, 21b) montés en vue de procurer un mouvement de coulissement l'un par rapport à l'autre et par rapport à l'ensemble de montage (6a), lequel porte les membres de support, situation dans laquelle le miroir (18a) peut être déplacé par translation par rapport à l'ensemble de montage entre lesdites première et seconde positions du miroir, lors du mouvement de coulissement desdits membres de support par rapport à l'ensemble de montage.

5. Un ensemble rétroviseur, selon les stipulations de l'une quelconque des revendications précédentes, caractérisé en outre en ce que des dispositifs d'entraînement sont prévus pour déplacer le miroir (18, 18a) entre lesdites première et deuxième positions.
